# EUROPÄISCHE PATENTSCHRIFT

(11) **EP 0 512 206 B1**
(45) Veröffentlichungstag und Bekanntmachung des Hinweises auf die Patenterteilung: **28.05.1997**
(21) Anmeldenummer: 92103241.3
(22) Anmeldetag: 26.02.1992
(51) Int. Cl.: H04B 1/20

(54) **Verfahren zur Auswahl einer Betriebsweise bei einem Gerät der Unterhaltungselektronik**
Method for selecting a mode of operation for an entertainment appliance
Procédé pour choisir un mode de fonctionnement d'un appareil de divertissement

(30) Priorität: 08.05.1991 DE 4115051
(43) Veröffentlichungstag der Anmeldung: 11.11.1992
(73) Patentinhaber: GRUNDIG Aktiengesellschaft, 90762 Fürth (DE)
(72) Erfinder: Rosenberger, Winfried, Dipl.-Ing. (FH), Grundig, Kurgartenstrasse 37, W-8150 Fürth/Bay (DE)

(56) Entgegenhaltungen:
- EP-A- 0 181 537
- EP-A- 0 239 760
- EP-A- 0 253 110
- DE-C- 4 018 368
- FR-A- 2 552 283
- PATENT ABSTRACTS OF JAPAN vol. 14, no. 401 (E-971)30. August 1990

## Beschreibung

Die Erfindung betrifft ein Verfahren zur Auswahl einer Betriebsweise bei einem Gerät der Unterhaltungselektronik mit den im Oberbegriff des Anspruchs 1 angegebenen Merkmalen.

Im Zusammenhang mit Fernsehempfängern und Videorecordern der Anmelderin ist bereits ein Verfahren zur Sprachauswahl bekannt. Bei diesem bekannten Verfahren wird unter Verwendung der Bedientastatur des Gerätes und unter Steuerung durch einen Mikrocomputer auf dem Bildschirm des Fernsehempfängers eine Textseite dargestellt, auf der gleichzeitig und untereinander verschiedene Sprachen zur Auswahl angeboten werden. Aus diesen angebotenen Sprachen wählt der Benutzer durch Verschieben eines Cursors eine gewünschte Sprache an. Ist der Cursor auf die gewünschte Sprache gerichtet und wird eine Übernahmetaste betätigt, dann wird ein Kennbit für die ausgewählte Sprache in einem Speicher des Gerätes abgelegt. Das hat zur Folge, daß beim nachfolgenden Gerätebetrieb - beispielsweise bei der Programmierung des Videorecorders - Benutzerführungsinformationen in der ausgewählten Sprache dargestellt werden. Bei diesem bekannten Verfahren steht die gesamte Fläche des Bildschirms eines Fernsehempfängers zur Darstellung der genannten Textseite, auf der die verschiedenen Sprachen zur Auswahl angeboten werden, zur Verfügung.

Dieses bekannte Verfahren ist folglich bei Geräten der Unterhaltungselektronik, welche zur Darstellung von Informationen nicht den Bildschirm eines Fernsehempfängers verwenden und welche meist nur mit einem ein- oder zweizeiligen Display ausgestattet sind, nicht verwendbar.

Bei derartigen Geräten könnte eine Sprachauswahl dadurch erfolgen, daß auf der Bedieneinheit für jede der angebotenen Sprachen eine eigene Taste vorgesehen ist, mittels der die gewünschte Sprache ausgewählt wird. Dieses Vorgehen wäre jedoch mit einer nicht mehr vertretbaren Vergrößerung der Anzahl der Tasten auf der Bedieneinheit verbunden.

Der Erfindung liegt die Aufgabe zugrunde, ein Verfahren zur Auswahl einer Betriebsweise anzugeben, welches bei Geräten der Unterhaltungselektronik verwendbar ist, welche nur mit einem ein- oder zweizeiligen Display ausgestattet sind.

Diese Aufgabe wird bei einem Verfahren mit den im Oberbegriff des Anspruchs 1 angegebenen Merkmalen durch die im kennzeichnenden Teil des Anspruchs 1 angegebenen Merkmale gelöst. Bevorzugte Verwendungsformen sind Gegenstand der weiteren Patentansprüche.

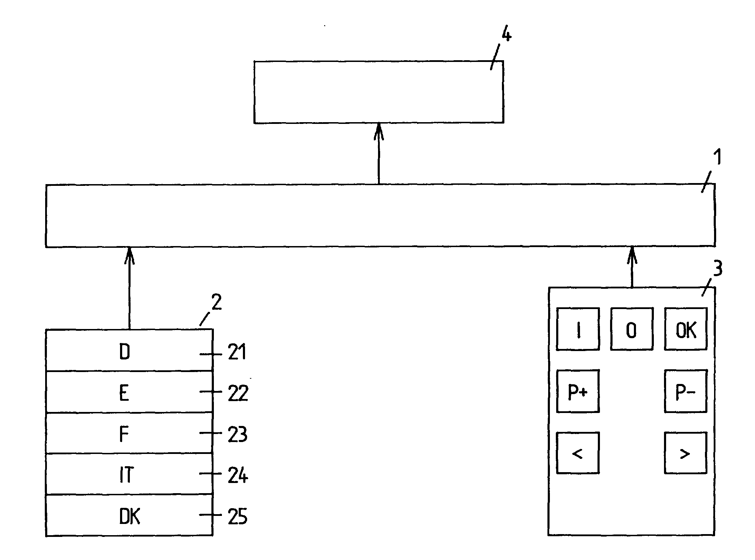

Die Vorteile der Erfindung ergeben sich aus der nachfolgenden Erläuterung zweier Ausführungsbeispiele anhand der Figur.

Nach einem ersten Ausführungsbeispiel erfolgt eine Sprachauswahl bei einem Empfänger für digitale Satelliten-Hörrundfunksignale. Derartige über eine Satelliten-übertragungsstrecke übertragene Signale sind in mehreren Ländern empfangbar, welche unterschiedliche Landessprachen haben, z.B. in Deutschland, England, Frankreich, Italien und Dänemark.

Aus DE 40 18 368 C1 ist eine Einrichtung zur Programmierung eines Videorecorders unter Verwendung einer Fernsehtext-Programmvorschauseite bekannt. Die Programmierung erfolgt dabei unabhängig vom Fernsehbildschirm unter Verwendung eines beispielsweise einzeiligen Diplays am Gerätegehäuse.

Aus JP-A-2151128 ist eine Bedieneinheit bekannt, bei der die Dauer der Betätigung der Taste dafür entscheidend ist, welche Funktion mittels dieser Taste ausgewählt wird.

Aus EP-A-0 239 760 ist ein Verfahren zum Heraussuchen der gewünschten Sprachinformation beim Empfang von Fernsehsignalen mit mehreren Tonkanälen bekannt. Dabei werden vom Benutzer vor der Inbetriebnahme des Empfangsgerätes verschiedenen Sprachen verschiedene Prioritäten zugeordnet. Beim späteren Empfang einer Fernsehsendung wird unter Verwendung der die verschiedenen Sprachen charakterisierenden Kenninformationen, die parallel zur eigentlichen Sendung übertragen werden, automatisch aus den angebotenen Sprachen diejenige mit der höchsten Priorität herausgesucht.

Aus EP-A-0 181 537 ist bekannt, durch Verwendung nur zweier Bedientasten, nämlich eines Auswahltasters und eines Eingabetastschalters, alle in einer Betriebsart, z.B. Aufzeichnung, Wiedergabe, Aufzeichnungsprogrammierung, notwendigen Eingabevorgänge durchzuführen.

Aus der EP-A-0 253 110 ist ein mikrocomputergesteuerter Videotextdecoder bekannt. Diesem ist ein zusätzlicher Speicher zugeordnet, in welchem eine mittels der Einrichtung zur Eingabe von Befehlen programmierbare Übersichtsseite abgespeichert ist, die unabhängig vom übertragenen Videotext ist.

Zusammen mit den Satelliten-Hörrundfunksignalen wird - wie es beispielsweise aus der Zeitschrift "Funkschau", Heft 22, 1986, S. 28-31, grundsätzlich bekannt ist - eine Kenninformation über die Programmart ausgestrahlt, beispielsweise in Form von drei Kennbits. Programmarten sind beispielsweise NACHRICHTEN, SPORT, KULTUR, POP, ROCK, LERNEN, usw.. Um in jedem der oben genannten Länder die Programmart der momentan empfangenen Hörrundfunksendung in der jeweiligen Landessprache auf einer einzeiligen, an der Vorderseite des Empfängers angeordneten Flüssigkristallanzeige 4 darstellen zu können, weist die in der Figur gezeigte Vorrichtung einen Mikrocomputer 1, einen Speicher 2, in dessen Speicherbereichen 21, 22, 23, 24 und 25 bei der Fertigung des Gerätes Benutzerführungsinformationen und die Bezeichnungen für die Programmarten in den jeweiligen Landessprachen abgespeichert werden, und eine Bedieneinheit 3 auf, die wie folgt zusammenarbeiten: Durch Eingabe eines Bedienbefehles mittels der Bedieneinheit 3 wird der Empfänger in den Bereitschaftsbetrieb gebracht. Im Bereitschaftsbetrieb wird eine vorbestimmte Taste der Bedieneinheit 3, beispielsweise die Taste I, deren Betätigung im Normalbetrieb des Gerätes die Anzeige der Programmart der momentan übertragenen Hörrundfunksendung auslöst, für die Dauer von 5 Sekunden gedrückt gehalten. Dadurch wird dem Mikrocomputer 1 mitgeteilt, daß eine Sprachauswahl erfolgen soll. In Ansprache auf diesen Befehl initiiert der Mikrocomputer 1 die Anzeige der momentan gültigen Sprache auf dem einzeiligen Display 4, z.B. "DEUTSCH". Bei Betätigung der Tasten "P+" oder "P-" der Bedieneinheit 3, die im Normalbetrieb des Gerätes zu einer Kanalumschaltung verwendet werden, werden nacheinander unter Steuerung durch den Mikrocomputer 1 die möglichen Sprachen auf dem einzeiligen Display 4 aufgelistet und damit zur Auswahl angeboten. Wird die gewünschte Sprache, z.B. "FRANCAIS", auf dem Display 4 angezeigt und eine Übernahmetaste OK betätigt, welche im Normalbetrieb des Gerätes beispielsweise zur Einstellung von in einem nicht gezeichneten Speicher des Gerätes abgelegten Optimalwerten für die Helligkeit des Displays verwendet wird, dann werden im genannten Speicher weiterhin mehrere Kennbits für die angewählte Sprache abgespeichert.

Beim nachfolgenden Gerätebetrieb erkennt der Mikrocomputer 1 anhand der abgespeicherten Kennbits, daß die französische Sprache gewünscht ist und steuert dann, wenn Benutzerführungsinformationen oder die Programmart der momentan empfangenen Hörrundfunksendung angezeigt werden soll, den der französichen Sprache zugeordneten Speicherbereich 23 des Speichers 2 an.

Wird im Gerätebetrieb die Anzeige der Programmart gewünscht und werden zusammen mit dem Hörrundfunksignal zwei verschiedene Kenninformationen ausgestrahlt, beispielsweise um den Beitrag als zu den Programmarten "LERNEN" und "KULTUR" gehörig zu kennzeichnen, dann kann die Anzeige auf dem einzeiligen Display 4 in Form einer Laufschrift erfolgen.

Nach einem zweiten Ausführungsbeispiel erfolgt eine Auswahl der Arbeitsweise eines Empfängers für digitale Satelliten-Hörrundfunksignale. Ein derartiger Empfänger hat grundsätzlich die Aufgabe, die von der Außeneinheit einer Satellitenempfangsantenne, einem speziellen Ausgang eines Satelliten-Fernsehempfängers oder über das Kabelnetz der Deutschen Bundespost angelieferten digitalen Hörrundfunksignale in eine für herkömmliche HiFi-Anlagen geeignete Form umzuwandeln. Diese Umwandlung erfolgt in einer der beiden nachstehend erläuterten Arbeitsweisen:

In einer ersten Arbeitsweise werden die angelieferten digitalen Hörrundfunksignale - abgesehen von der genannten Umwandlung in eine für die Hifi-Anlage geeignete Form - ohne jegliche Regelung möglichst naturgetreu am Ausgang des Empfängers zur Verfügung gestellt, um eine hochwertige Übertragung der Hörrundfunksignale zur Hifi-Anlage zu ermöglichen.

In einer zweiten Arbeitsweise werden die angelieferten digitalen Hörrundfunksignale - um dem Gerätebenutzer Komfort zu bieten - über eine Schaltung zur Lautstärkeregelung bzw. Pegelanpassung geführt. Diese Lautstärkeregelung erfolgt über die Bedieneinheit des Empfängers, bei der es sich vorzugsweise um eine Fernbedienung handelt. Mittels dieser Regelmöglichkeit kann dem Umstand Rechnung getragen werden, daß die verschiedenen Hörrundfunkbeiträge mit unterschiedlichen Pegeln ausgestrahlt werden. Die zur Anpassung an einen gewünschten Pegel nötige Regelinformation kann für jeden Hörrundfunkbeitrag individuell abgespeichert werden, so daß beim späteren Gerätebetrieb die einzelnen Beiträge automatisch in der gewünschten Lautstärke wiedergegeben werden. Bei einem Empfänger, der diese zweite Arbeitsweise nicht aufweist, wäre der Benutzer gezwungen, die Lautstärkeregelung an der HiFi-Anlage vorzunehmen.

Die Auswahl der gewünschten Arbeitsweise geschieht wie folgt:

Durch Eingabe eines Bedienbefehls mittels der Bedieneinheit 3 wird der Empfänger in den Bereitschaftsbetrieb gebracht. Im Bereitschaftsbetrieb wird eine vorbestimmte Taste der Bedieneinheit 3, beispielsweise die Taste O, mittels der der Empfänger in den Bereitschaftsbetrieb gebracht wird, für die Dauer von 5 Sekunden gedrückt gehalten. Dadurch wird dem Mikrocomputer 1 mitgeteilt, daß eine Auswahl einer der Arbeitsweisen "NF-AUSGANG GEREGELT" oder "NF-AUSGANG UNGEREGELT" erfolgen soll. In Ansprache auf diesen Befehl initiiert der Mikrocomputer 1 die Anzeige der momentan gültigen Arbeitsweise auf dem einzeiligen Display 4, z.B. "NF-AUSGANG GEREGELT". Bei Betätigung einer der Tasten "<" oder ">", die im Normalbetrieb des Gerätes zur Regelung der Lautstärke verwendet werden, wird der Schriftzug bzw. die Arbeitsweise "NF-AUSGANG UNGEREGELT" auf dem einzeiligen Display 4 dargestellt und damit zur Auswahl angeboten. Wird während dieser Darstellung die Übernahmetaste OK betätigt, welche im Normalbetrieb des Gerätes beispielsweise zur Einstellung von in einem nicht gezeichneten Speicher des Gerätes abgelegten Optimalwerten für die Helligkeit des Displays verwendet wird, dann wird im genannten Speicher weiterhin ein Kennbit für die ausgewählte Arbeitsweise abgespeichert.

Beim nachfolgenden Gerätebetrieb erkennt der Mikrocomputer 1 anhand des abgespeicherten Kennbits, daß die Arbeitsweise "NF-AUSGANG UNGEREGELT" gewünscht ist, und initiiert die gewünschte Signalverarbeitung.

## Patentansprüche

1. Verfahren zur Auswahl einer Betriebsweise bei einem Gerät der Unterhaltungselektronik, welches mit einer Bedieneinheit (3) zur Eingabe von Befehlen, einem Display (4) und einem Mikrocomputer zur Auswertung der mittels der Bedieneinheit eingegebenen Befehle und zur Steuerung des Displays (4) ausgerüstet ist,
**dadurch gekennzeichnet**, daß
- zur Auswahl der Betriebsweise das Gerät in den Bereitschaftsbetrieb gebracht wird,
- im Bereitschaftsbetrieb durch Verwendung von Tasten der Bedieneinheit (3), denen im Normalbetrieb andere Funktionen zugeordnet sind, nacheinander unter Steuerung durch den Mikrocomputer (1) verschiedene Betriebsweisen durch Anzeige auf dem Display (4) angeboten werden, und
- eine angebotene Betriebsweise durch Betätigung einer Übernahmetaste der Bedieneinheit (3) ausgewählt wird.

2. Verfahren nach Anspruch 1,
**dadurch gekennzeichnet,** daß es zur Auswahl zwischen verschiedenen Sprachen verwendet wird, in denen im Gerätebetrieb Informationen auf dem Display (4) dargestellt werden.

3. Verfahren nach Anspruch 1 oder 2,
**dadurch gekennzeichnet,** daß es zur Auswahl einer Arbeitsweise des Gerätes verwendet wird.

4. Verfahren nach Anspruch 3,
**dadurch gekennzeichnet,** daß es bei Empfängern für digiale Satelliten Satelliten-Hörrundfunksignale zur Auswahl einer ersten Arbeitsweise, bei der eine Lautstärkeregelung des Signals erfolgt, oder einer zweiten Arbeitsweise, bei der keine Lautstärkeregelung des Signals erfolgt, verwendet wird.

## Claims

1. Method for selecting an operating mode in an entertainment electronics appliance which is equipped with a control unit (3) for inputting commands, a display (4) and a microcomputer for evaluating the commands inputted by means of the control unit and for controlling the display (4), characterized in that
- to select the operating mode, the appliance is set to the stand-by mode,
- in the stand-by mode, various operating modes are offered by indication on the display (4) as a result of consecutively using, under the control of the microcomputer (1), keys on the control unit (3) to which other functions are assigned in the normal mode, and
- an operating mode which is offered is selected by actuating an enter key on the control unit (3).

2. Method according to Claim 1, characterized in that it is used to select between various languages in which information is shown on the display (4) while the appliance is operating.

3. Method according to Claim 1 or 2, characterized in that it is used to select a working mode of the appliance.

4. Method according to Claim 3, characterized in that it is used in the case of receivers for digital digital sound broadcasting signals to select a first working mode in which the volume of the signal is regulated or a second working mode in which the volume of the signal is not regulated.

## Revendications

1. Procédé pour choisir un mode de fonctionnement dans un appareil de l'électronique du spectacle, qui est équipé d'une unité de commande (3) pour introduire les instructions, d'un dispositif d'affichage (4) et. d'un micro-ordinateur pour exploiter les instructions introduites au moyen de l'unité de commande et pour commander le dispositif d'affichage (4), caractérisé en ce que
- on place l'appareil dans l'état prêt à fonctionner pour sélectionner le mode de fonctionnement,
- dans l'état prêt à fonctionner, en utilisant des touches de l'unité de commande (3), auxquelles d'autres fonctions sont associées pendant le fonctionnement normal, différents modes de fonctionnement sont proposés successivement, par affichage sur le dispositif d'affichage (4), sous la commande du micro-ordinateur, et
- on sélectionne un mode de fonctionnement proposé, par actionnement d'une touche de transfert de l'unité de commande (3).

2. Procédé selon la revendication 1, caractérisé en ce qu'on l'utilise pour effectuer un choix entre différentes langues, dans lesquelles des informations sont présentées sur le dispositif d'affichage (4), pendant le fonctionnement de l'appareil.

3. Procédé selon la revendication 1 ou 2, caractérisé en ce qu'on l'utilise pour sélectionner un mode de fonctionnement de l'appareil.

4. Procédé selon la revendication 3, caractérisé en ce qu'on l'utilise dans des récepteurs pour des signaux radio numériques transmis par satellite pour sélectionner un premier mode de fonctionnement, lors duquel se produit une régulation de l'intensité acoustique du signal, ou un second mode de fonctionnement, lors duquel il ne se produit aucune régulation de l'intensité acoustique du signal.
